# EUROPÄISCHE PATENTSCHRIFT

(11) **EP 1 927 181 B1**
(45) Veröffentlichungstag und Bekanntmachung des Hinweises auf die Patenterteilung: **29.12.2010**
(21) Anmeldenummer: 06778139.3
(22) Anmeldetag: 03.08.2006
(51) Int. Cl.: H02K 55/04, H02K 11/00, F17C 13/00

(54) **MASCHINE DER SUPRALEITUNGSTECHNIK MIT DÄMPFERSCHIRMTEIL**
MACHINE BASED ON SUPERCONDUCTING TECHNOLOGY WITH A BAFFLE SCREEN PART
MACHINE RELEVANT DE LA TECHNOLOGIE DE LA SUPRACONDUCTIVITE EQUIPEE D'UN ECRAN AMORTISSEUR

(30) Priorität: 23.09.2005 DE 102005045595
(43) Veröffentlichungstag der Anmeldung: 04.06.2008
(73) Patentinhaber: SIEMENS AKTIENGESELLSCHAFT, 80333 München (DE)
(72) Erfinder: FRANK, Michael, 91080 Uttenreuth (DE); MASSEK, Peter, 91301 Forchheim (DE); NICK, Wolfgang, 90419 Nürnberg (DE)
(86) Internationale Anmeldenummer: PCT/EP2006/065004
(87) Internationale Veröffentlichungsnummer: WO 2007/033858

(56) Entgegenhaltungen:
- EP-A2- 0 087 263
- EP-A2- 1 258 973
- WO-A-02/43224
- JP-A- 7 222 431
- JP-A- 56 086 050
- US-A- 4 914 328

## Beschreibung

Die Erfindung bezieht sich auf eine Maschine der Supraleitungstechnik mit einem Ständer, der einen um eine Läuferachse drehbar gelagerten Läufer unter Ausbildung eines Luftspaltes umschließt, wobei der Läufer
- einen Kaltteil enthält,
   a) in dem zu kühlende Supraleiter einer Läuferwicklung angeordnet sind
      und
   b) der von einem warmen Gehäuse umschlossen ist, an dessen dem Luftspalt zugewandter Außenwand wenigstens ein als ein Dämpferschirm wirkender Teil vorhanden ist,
      sowie
- zwischen dem Kaltteil und dem warmen Gehäuse thermische Isolationsmittel aufweist.

Eine entsprechende Maschine geht aus der US 4,914,328 A hervor.

Einen gravierenden Störungsfall von rotierenden elektrischen Maschinen stellt der so genannte Stoßkurzschluss dar. Bei einem solchen Stoßkurzschluss können Überlastmomente auftreten, die ein Vielfaches, z.B. bei einer zweipoligen Läuferwicklung das 10- bis 20-Fache des Nettomomentes der Maschine, betragen. Trotz aller Vorsichtsmaßnahmen können im Betrieb einer Maschine solche Kurzschlüsse, die z.B. eine Folge von Fehlschaltungen oder Fehlbedienungen bzgl. der Ständerwicklung eines Ständers sein können, nicht ausgeschlossen werden. Darüber hinaus wird bei einem Typtest einer Maschine als entsprechende Vorsichtsmaßnahme vielfach auch der Nachweis verlangt, dass solche Störungsfälle zu keiner Dauerschädigung von Teilen der Maschine führen.

Bei einer Maschine mit supraleitender Läuferwicklung treten neben anderen unerwünschten Auswirkungen in solchen Störungsfällen auch erhebliche Belastungen in der radialen Außenwand eines warmen Gehäuses des Läufers auf, das aus thermischen Isolationsgründen als Vakuumgehäuse bzw. Kryostatgehäuse ausgebildet ist. Denn die der Ständerwicklung zugewandte Gehäuse- bzw. Kryostataußenwand, die im Allgemeinen aus metallischem Material besteht, wirkt zugleich als ein elektromagnetischer Dämpferschirm bzw. trägt einen solchen Schirm (vgl. die eingangs genannte US 4,914,328 A). Hier können nämlich hohe Ströme induziert werden, insbesondere wenn der Dämpferschirm aus einem elektrisch gut-leitenden Material besteht. Diese Ströme haben dann in Wechselwirkung mit dem zwischen Läufer und Ständer erzeugten magnetischen B-Feld hohe Lorentz-Kräfte zur Folge.

Solche Belastungen wie erwähnt haben zweierlei Auswirkungen auf einen Dämpferschirm. Zum einen wird der Dämpferschirm durch die auftretenden Kräfte deformiert. Dabei gibt es Bereiche, in denen er einer Druckkraft von außen ausgesetzt ist und sich dabei nach innen wölbt, während er in anderen Bereichen eher eine entsprechende Deformation nach außen erfährt. Dabei darf der Dämpferschirm den Ständer nicht berühren, da dieser sonst zerstört werden könnte. Abhilfe lässt sich hier durch einen entsprechend großzügig bemessenen Luftspalt zwischen Ständerinnenradius und Gehäuseaußenradius erreichen. Dies hat zur Folge, dass insbesondere bei axial ausgedehnten Läufern Werte für die radiale Ausdehnung des Luftspaltes erforderlich werden, die deutlich oberhalb von einigen Millimetern liegen, wie sie bei konventionellen Maschinen üblich sind. Zum anderen treten in einem solchen Störungsfall in dem Dämpferschirm durch die Deformation auch Materialspannungen auf. Die entsprechenden Belastungen müssen unterhalb der Grenzwerte für eine plastische Deformation des gewählten Dämpferschirmmaterials liegen, da sonst das Außengehäuse des Läufers nach einem Stoßkurzschluss deformiert bleiben würde. Abhilfe kann hier nur durch eine ausreichende Wandstärke des Dämpferschirms geschaffen werden.

Allerdings bewirken beide Vorsichtsmaßnahmen, dass der "magnetische Luftspalt" (der elektromagnetischen Wechselwirkung zwischen Läuferwicklung und Ständerwicklung der Maschine) folglich entsprechend groß bemessen sein muss. Da andererseits die Felder mit abnehmendem Abstand vom felderzeugenden Kaltteil des Läufers bzw. dessen supraleitender Läuferwicklung abnehmen, bedingen große Wandstärken und große Luftspalte eine deutlich schlechtere Ausnutzung des eingesetzten Supraleitermaterials.

Die EP-1258973 A2 offenbart ein supraleitenden Rotor, dessen warmer Dampferschiren mit radialen Abstützungen gegen Verformungen während eines Störfalls versehen sind. Die Abstützungen berühren. den kalten Teil des Rotors.

Aufgabe der vorliegenden Erfindung ist es deshalb, bei einer Maschine mit den eingangs genannten Merkmalen eine derartige Überdimensionierung zu vermeiden, die insbesondere auf eine Deformation des Dämpferschirms oder von entsprechend wirkenden Gehäuseteilen in einem Störungsfall zurückzuführen ist.

Diese Aufgabe wird erfindungsgemäß mit den in Anspruch 1 angegebenen Merkmalen gelöst. Demgemäß sollen bei der Maschine mit den eingangs genannten Merkmalen zwischen dem warmen Gehäuse und dem Kaltteil an vorbestimmten Stellen Abstützelemente vorgesehen sein, die sich in radialer Richtung so weit erstrecken, dass
- in einem ungestörten Betriebsfall der Maschine zwischen den Abstützelementen und dem warmen Gehäuse oder dem Kaltteil jeweils ein geringer Abstand ausgebildet ist
   und
- erst in einem Störungsfall der Maschine, der zu einer ein vorbestimmtes Maß überschreitenden Deformation des warmen Gehäuses (bzw. des damit verbundenen Dämpferteils) führt, ein Kraftschluss zwischen dem warmen Gehäuse und dem Kaltteil über die Abstützelemente gegeben ist.

Bei den Maßnahmen nach der Erfindung wird nämlich von der Überlegung ausgegangen, dass mit Abstützelementen an dem warmen Gehäuse oder dem Kaltteil an den Stellen, an denen der Dämpferschirm (oder der als ein solcher wirkende Gehäuseteil) komprimierende Kräfte erfährt, einerseits ermöglicht wird, mit verhältnismäßig geringen Wandstärke von Gehäuse und/oder Dämpferschirm sowie mit kleinen mechanischen Luftspalten auszukommen und andererseits aber Belastungen der Stoßkurzschlüsse hinreichend sicher beherrschen zu können. Die Abstützelemente sind dabei so bemessen, dass sie im Normalbetrieb zur Vermeidung von Wärmeeinleitungsverlusten keinen mechanischen Kontakt mit der warmen Gehäuse- bzw. Kryostatwand bzw. des Dämpferschirms einerseits oder mit dem Kaltteil andererseits aufweisen. Abhängig von der Geometrie und den Materialdaten des Dämpferschirms ist dabei ein gewisses Maß an Deformation ohne schädliche Auswirkungen zulässig. D.h., die Abstützelemente sind dann so bemessen, dass sie erst ab einer vorgegebenen Deformation des Dämpferschirms wirksam werden. Damit brauchen sie auch nur noch jene Kraftanteile aufzunehmen, die notwendig sind, um den Dämpferschirm um mehr als dieses vorgegebene, zulässige Maß zu verformen.

Die mit der erfindungsgemäßen Ausgestaltung der Maschine verbundenen Vorteile sind folglich darin zu sehen, dass der magnetische Luftspalt verhältnismäßig klein gehalten werden kann und damit die eingesetzten Supraleiter mit entsprechend hohem Wirkungsgrad auszunutzen sind. Durch die spezielle vorgeschlagene Ausführung von Abstützelementen wird zudem auch die Wärmelast im Normalbetrieb der Maschine nicht oder nur geringfügig erhöht.

Vorteilhafte Ausgestaltungen der erfindungsgemäßen Maschine gehen aus den von Anspruch 1 abhängigen Ansprüchen hervor. Dabei kann die Ausführungsform nach Anspruch 1 mit den Merkmalen eines der Unteransprüche oder vorzugsweise auch denen aus mehreren Unteransprüchen kombiniert werden. Demgemäß kann die insbesondere als Synchronmotor, vorzugsweise als Generator, ausgebildete Maschine nach der Erfindung zusätzlich noch folgende Merkmale aufweisen:
- So können bevorzugt die Abstützelemente an solchen Stellen angeordnet sein, in denen in dem Störungsfall an dem Gehäuse eine radial nach innen wirkende Deformationskraft angreift. Diese Stellen befinden sich im Allgemeinen in einem axial gesehen mittleren Bereich des Läufers, wo die größte Deformation zu befürchten ist. In den stirnseitigen Bereichen weist nämlich das Gehäuse im Allgemeinen eine hinreichend große radiale Steifigkeit. Die Anzahl der Abstützelemente und damit ihr wärmeleitender Gesamtquerschnitt sind somit zu begrenzen.
- Der Dämpferschirm kann entweder als Teil des warmen Gehäuses ausgebildet sein oder an der Außen- oder Innenseite des warmen Gehäuses angeordnet sein. Beide Ausgestaltungsmöglichkeiten sind allgemein bekannt.
- Vorteilhaft werden mehrere in axialer Richtung verteilt angeordnete Abstützelemente vorgesehen, die verhältnismäßig kleine Einzelquerschnitte aufweisen. Auch so lässt sich eine Wärmeübertragung zwischen Kaltteil und warmem Gehäuse begrenzen.
- Bevorzugt können die Abstützelemente aus thermisch schlecht-leitendem Material wie insbesondere aus einem glasfaserverstärkten Material bestehen, um den Wärmeübertrag bei hinreichender Steifigkeit so gering wie möglich zu halten.
- Als thermische Isolationsmittel kommen insbesondere Vakuum und/oder wenigstens eine Superisolation in Frage. Entsprechende Maßnahmen sind allgemein bekannt.
- Die Vorteile einer geringen radialen Ausdehnung des Luftspalts kommen insbesondere bei einer Läuferwicklung zum Tragen, die mit Leitern aus einem der bekannten metalloxidischem HTS (High-T_{c}-Superconducting)-Materialien erstellt ist. Stattdessen sind selbstverständlich auch Leiter aus metallischem LTS (Low-T_{c}-Superconducting)-Material verwendbar. Die einsetzbaren Leitertypen können dabei Bandleiter oder Seilverbundleiter wie z.B. Röbelleiter sein.

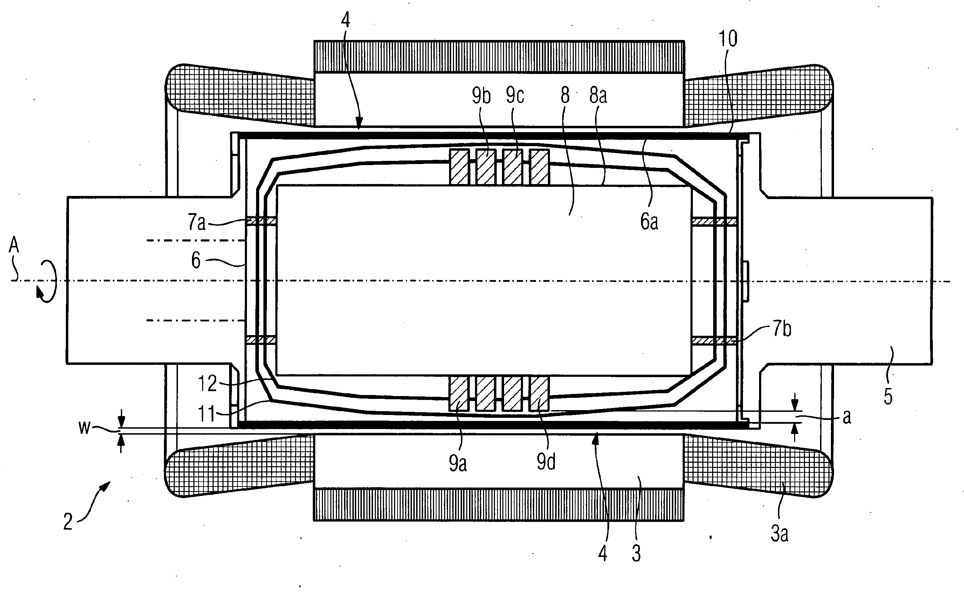

Zur weiteren Erläuterung der Erfindung wird nachfolgend auf die Zeichnung Bezug genommen, an Hand derer ein bevorzugtes Ausführungsbeispiel einer Maschine nach der Erfindung noch weiter beschrieben ist. Dabei zeigt deren einzige Figur einen Längsschnitt durch die Maschine in schematisierter Form.

Bei der nachfolgend an Hand der Figur angedeuteten Ausführungsform der Maschine kann es sich insbesondere um einen Synchron-Motor oder einen Generator handeln. Die Maschine umfasst eine rotierende, supraleitende Erregerwicklung, die prinzipiell eine Verwendung von metallischem LTS-Material oder oxidischem HTS-Material gestattet. Letzteres Material sei für das Ausführungsbeispiel zugrunde gelegt. Maßnahmen zu einer Kühlung des Supraleitermaterials z.B. auf eine Temperatur von etwa 30 K sind allgemein bekannt, so dass in der Figur auf eine Darstellung dieser Maßnahmen verzichtet wurde. Die Wicklung kann aus einer Spule oder einem System von Spulen in einer zwei-, vier- oder sonstigen mehrpoligen Anordnung bestehen. Der prinzipielle Aufbau eines entsprechenden Synchronmotors geht aus der Figur hervor, wobei von bekannten Ausführungsformen entsprechender Maschinen ausgegangen wird (vgl. die eingangs genannte US 4, 914,328 A oder die WO 02/43224 A).

Die allgemein mit 2 bezeichnete Maschine umfasst ein feststehendes, auf Raumtemperatur befindliches Außengehäuse mit einem ortsfesten Ständer 3, von dessen Ständerwicklung stirnseitige Wickelköpfe 3a ersichtlich sind. Innerhalb des Außengehäuses und von der Ständerwicklung unter Ausbildung eines Luftspaltes 4 mit einer radialen Spaltweite w umschlossen ist ein Läufer 5, der drehbar um eine Läuferachse A gelagert ist. Der Läufer weist ein warmes, im Allgemeinen auf Raumtemperatur befindliches Gehäuse 6 auf, in dem aus thermischen Isolationsgründen nach Art eines Kryostaten ein Vakuum V herrscht. Innerhalb des somit als ein Vakuumgehäuse oder Kryostatgehäuse anzusehenden Gehäuses 6 ist über Aufhänge- oder sonstige Befestigungselemente 7a und 7b ein Kaltteil 8 gehaltert. Der in der Figur nicht näher ausgeführte Kaltteil umfasst in an sich bekannter Weise einen Wicklungsträger zur Aufnahme einer von einem Kältemittel zu kühlenden supraleitenden Erregerwicklung. Die erforderliche Kältemittelversorgung der Erregerwicklung ist in der Figur nicht dargestellt, da sie allgemein bekannt ist. Der Kaltteil 8 weist dabei eine von des Kältemittel der Wicklung direkt oder indirekt mit gekühlter kalter Außenseite 8a auf.

Aus der Figur geht ferner hervor, dass zumindest in einem mittleren Bereich des Kaltteils 8 auf dessen Außenseite 8a einzelne, sich radial erstreckende Abstützelemente 9a bis 9d z.B. in Form von einzelnen Abstandshaltern oder von Abstandsringen angebracht sind. Diese Abstützelemente können die Außenseite konzentrisch umschließen. Sie erstrecken sich dabei erfindungsgemäß nicht hin bis zur Innenseite der rohrförmigen Gehäusewand 6a des Vakuumgehäuses 6; vielmehr ist zwischen dieser Wand 6a und der entsprechenden Stirnseite jedes Abstützelementes ein vorbestimmter Zwischenraum oder Abstand a eingehalten, um so im Normalbetrieb der Maschine Wärmeleitungsverluste über diese Elemente zu vermeiden bzw. zu begrenzen.

Wie darüber hinaus in der Figur durch eine verstärkte Linie angedeutet sein soll, ist die Gehäusewand 6a selbst in an sich bekannter Weise als ein Dämpferschirm(teil) 10 ausgebildet, wobei das Gehäuse z.B. aus Stahl bestehen kann. Oder aber es ist an der Innen- oder Außenseite der Gehäusewand 6a ein besonderer Dämpferschirm z.B. aus Kupfer (Cu) oder Aluminium (al) oder gegebenenfalls auch aus einer Legierung eines der genannten Materialien angebracht. Selbstverständlich kann dabei der Dämpferschirm oder der als ein solcher wirkende Gehäuseteil auch aus mehreren Teilen zusammengesetzt sein (vgl. die eingangs genannte US 4,914,328 A oder die EP 0 087 263 A2). Die Abstützelemente 9a bis 9d werden dann bevorzugt an den Stellen des Kaltteils 8 angeordnet, wo auf diesen Dämpferschirm 10 komprimierende, d.h. radial nach innen wirkende Kräfte in einem Störungsfall wie z.B. einem Kurzschluss der Ständerwicklung einwirken. Gemäß dem Ausführungsbeispiel sein davon ausgegangen, dass in einem axial gesehen mittleren Bereich des Kaltteils 8 solche komprimierenden Kräfte wirken können. Abhängig von der Geometrie und den für den Dämpferschirm gewählten Materialien wie z.B. Cu sei ein gewisses Maß an radialer Deformation, z.B. von 2 mm, ohne schädliche Auswirkungen zulässig. Die Abstützelemente sollten dann so bemessen sein, dass sie erst ab einer Deformation über ein vorbestimmtes Maß hinaus wie z.B. von 1,5 mm zum Tragen kommen. Damit brauchen sie auch nur Kraftanteile aufzunehmen, die notwendig sind, um den Dämpferschirm um mehr als dieses vorgegebene Maß zu verformen.

Zu einer Begrenzung der Wärmeübertragung über die Abstützelemente 9a bis 9d bei einem mechanischen Kontakt mit dem warmen Gehäuse 6 und dem Kaltteil 8 sollten die Abstützelemente bevorzugt aus wenigstens einem thermisch schlecht-leitenden Material bestehen. Hierfür geeignete Materialien sind insbesondere glasfaserverstärkte Kunststoffmaterialien.

Um die Wärmelast durch Strahlungsverluste im Normalbetrieb, d.h. bei Fehlen eines solchen mechanischen Kontaktes zwischen den drei genannten Teilen (d.h. Kaltteil 8, Abstützungselemente 9a bis 9d, Gehäuse 6), klein halten zu können, sollten entweder die Abstützelemente 9a bis 9d auf dem Kaltteil 8 unterhalb einer notwendigen Superisolation 11, d.h. innerhalb dieser angebracht werden. Gegebenenfalls ist es auch möglich, die Oberfläche des Anteils der Abstützelemente, die unter Umständen aus technischen Gründen nicht unterhalb der Superisolation 11 liegen kann und dem Dämpferschild zugewandt ist, durch eine geeignete Strukturierung wie z.B. Querschnittsflächenverringerungen klein zu halten. Entsprechende Maßnahmen sind insbesondere dann von Vorteil, wenn auf eine den Kaltteil 8 umschließende Superisolation verzichtet werden soll. Dann können nämlich die Strahlungsverluste ohne eine umschließende Superisolation bis zu etwa 500 W/m² betragen.

In der Figur ist noch eine weitere Superisolation 12 ersichtlich, die so angebracht ist, dass die Abstützelemente 9a bis 9d teilweise durch die Superisolation 12 hindurch ragen. Falls eine solche Superisolation allein vorgesehen werden soll, ist eine Minimierung der Oberfläche der Abstützelemente, die der Strahlung des Dämpferschildes ausgesetzt ist, besonders vorteilhaft.

Außerdem ist zu berücksichtigen, dass ein als ringförmiges Abstützelement, z.B. als Element 9b, ausgebildeter umlaufender Abstützwulst von nur 10 cm Breite selbst bei einem Kaltteilumfang von nur 1 m bereits Verluste von etwa 50 W verursachen kann. Entsprechende Kälteleistungen können bei etwa 30 K oftmals von Kaltköpfen bekannter Maschinen kaum erbracht werden. Neben den dadurch bedingten hohen Kosten käme auch noch eine dafür notwendige Kompressoranschlussleistung beispielsweise von etwa 6 kW hinzu. Aus diesem Grunde ist es vorteilhaft, mehrere, z.B. 10 säulenartige Abstützelemente 9a bis 9d mit jeweils kleinem Querschnitt von beispielsweise 1 cm² auf einer Fläche von z.B. 10 x 10 cm² anzuordnen anstelle einer kaum wirksameren größeren Abstützung mit 10 cm x 10 cm = 100 cm² Querschnittsfläche.

Die Abstützelemente können entweder nach einem Bandagieren des Läuferkaltteils 8 auf der Bandage aufgebracht werden; oder aber man befestigt sie vor dem Bandagieren auf dem Kaltteil, so dass sie dann praktisch nach Art einer Laminierung in die Bandage eingebracht werden.

Gemäß dem dargestellten Ausführungsbeispiel wurde davon ausgegangen, dass die Abstützelemente 9a bis 9d an dem Kaltteil 8 angebracht werden und der Abstand a gegenüber der Gehäusewand 6a bzw. dem Dämpferschild 10 ausgebildet ist. Selbstverständlich können die Abstützelemente auch im Warmen an der Innenseite des Dämpferschildes bzw. der entsprechenden Gehäusewand befestigt werden, so dass dann der Abstand a gegenüber dem Kaltteil eingehalten wird. Hinsichtlich der Überlegung zur Minimierung der Strählungsverluste gelten auch hier die analogen Überlegungen wie bei der in der Figur dargestellten Ausführungsform der Maschine.

## Patentansprüche

1. Maschine (2) der Supraleitungstechnik mit einem Ständer (3), der einen um eine Läuferachse (A) drehbar gelagerten Läufer (5) unter Ausbildung eines Luftspaltes (4) umschließt, wobei der Läufer (5)
- einen Kaltteil (8) enthält,
a) in dem zu kühlende Supraleiter einer Läuferwicklung angeordnet sind
und
b) der von einem warmen Gehäuse (6) umschlossen ist, an dessen dem Luftspalt (4) zugewandter Außenwand (6a) wenigstens ein als ein Dämpferschirm (10) wirkender Teil vorhanden ist,
sowie
- zwischen dem Kaltteil (8) und dem warmen Gehäuse (6) thermische Isolationsmittel aufweist,
**dadurch gekennzeichnet, dass** zwischen dem warmen Gehäuse (6) und dem Kaltteil (8) an vorbestimmten Stellen Abstützelemente (9a bis 9d) vorgesehen sind, die sich in radialer Richtung so weit erstrecken, dass
- in einem ungestörten Betriebsfall der Maschine (2) zwischen den Abstützelementen (9a bis 9d) und dem warmen Gehäuse (6) oder dem Kaltteil (8) jeweils ein geringer Abstand (a) ausgebildet ist,
und
- erst in einem zu einer ein vorbestimmtes Maß überschreitenden Deformation des warmen Gehäuses (6) führenden Störungsfall der Maschine (2) ein Kraftschluss zwischen dem warmen Gehäuse (6) und dem Kaltteil (8) über die Abstützelemente (9a bis 9d) gegeben ist.

2. Maschine nach Anspruch 1, **dadurch gekennzeichnet, dass** zwischen den Abstützelementen (9a bis 9d) und dem warmen Gehäuse (6) jeweils der Abstand (a) ausgebildet ist.

3. Maschine nach Anspruch 1, **dadurch gekennzeichnet, dass** zwischen den Abstützelementen (9a bis 9d) und dem Kaltteil (8) jeweils der Abstand (a) ausgebildet ist.

4. Maschine nach einem der vorangehenden Ansprüche, **dadurch gekennzeichnet, dass** die Abstandselemente (9a bis 9d) an solchen Stellen angeordnet sind, in denen in dem Störungsfall an dem warmen Gehäuse (6) eine radial nach innen wirkende Deformationskraft angreift.

5. Maschine nach einem der vorangehenden Ansprüche, **dadurch gekennzeichnet, dass** der Dämpferschirm (10) als Teil des warmen Gehäuses (6) ausgebildet ist.

6. Maschine nach einem der Ansprüche 1 bis 4, **dadurch gekennzeichnet, dass** der Dämpferschirm (10) an der Außenseite oder Innenseite des warmen Gehäuses (6) angeordnet ist.

7. Maschine nach einem der vorangehenden Ansprüche, **dadurch gekennzeichnet, dass** mehrere in axialer Richtung verteilt angeordnete Abstützelemente (9a bis 9d) vorgesehen sind.

8. Maschine nach einem der vorangehenden Ansprüche, **dadurch gekennzeichnet, dass** die Abstützelemente (9a bis 9d) aus thermisch schlecht-leitendem Material bestehen.

9. Maschine nach Anspruch 8, **dadurch gekennzeichnet, dass** die Abstützelemente (9a bis 9d) aus einem glasfaserverstärkten Material bestehen.

10. Maschine nach einem der vorangehenden Ansprüche, **dadurch gekennzeichnet, dass** die Läuferwicklung mit Leitern aus LTS-Material erstellt ist.

11. Maschine nach einem der Ansprüche 1 bis 9, **dadurch gekennzeichnet, dass** die Läuferwicklung mit Leitern aus HTS-Material erstellt ist.

12. Maschine nach Anspruch 11, **dadurch gekennzeichnet, dass** HTS-Bandleiter oder HTS-Seilverbundleiter vorgesehen sind.

13. Maschine nach einem der vorangehenden Ansprüche, **dadurch gekennzeichnet, dass** die thermischen Isolationsmittel ein Vakuum (V) sind.

14. Maschine nach einem der vorangehenden Ansprüche, **dadurch gekennzeichnet, dass** die thermischen Isolationsmittel wenigstens eine Superisolation (11, 12) sind.

15. Maschine nach einem der vorangehenden Ansprüche, **gekennzeichnet durch** eine Ausbildung als Synchronmotor, vorzugsweise als Generator.

## Claims

1. Superconducting technology machine (2) having a stator (3), which encloses a rotor (5) mounted so as to rotate about a rotor axis (A) while forming an air gap (4), wherein the rotor (5)
- contains a cold part (8),
a) in which superconductors of a rotor winding, which are to be cooled, are arranged
and
b) which is enclosed by a warm housing (6) on whose outer wall (6a), facing the air gap (4), there is at least one part acting as a dampener shield (10),
and
- has thermal insulation means between the cold part (8) and the warm housing (6),
**characterized in that** support elements (9a to 9d) are provided at predetermined positions between the warm housing (6) and the cold part (8), and they extend so far in the radial direction that
- a small distance (a) is respectively formed between the support elements (9a to 9d) and the warm housing (6) or the cold part (8) in an undisturbed operating situation of the machine (2),
and
- there is a force-fit between the warm housing (6) and the cold part (8) by means of the support elements (9a to 9d) only in an anomalous situation of the machine (2) that leads to a deformation of the warm housing (6) which exceeds a predetermined extent.

2. Machine according to Claim 1, **characterized in that** the distance (a) is respectively formed between the support elements (9a to 9d) and the warm housing (6).

3. Machine according to Claim 1, **characterized in that** the distance (a) is respectively formed between the support elements (9a to 9d) and the cold part (8).

4. Machine according to one of the preceding claims, **characterized in that** the support elements (9a to 9d) are arranged at those positions where a deformation force acting radially inwardly engages on the warm housing (6) in the anomalous situation.

5. Machine according to one of the preceding claims, **characterized in that** the dampener shield (10) is formed as part of the warm housing (6).

6. Machine according to one of Claims 1 to 4, **characterized in that** the dampener shield (10) is arranged on the outside or inside of the warm housing (6).

7. Machine according to one of the preceding claims, **characterized in that** a plurality of support elements (9a to 9d) distributed in the axial direction are provided.

8. Machine according to one of the preceding claims, **characterized in that** the support elements (9a to 9d) consist of poorly thermally conducting material.

9. Machine according to Claim 8, **characterized in that** the support elements (9a to 9d) consist of a glass fiber-reinforced material.

10. Machine according to one of the preceding claims, **characterized in that** the rotor winding is constructed with conductors made of LTS material.

11. Machine according to one of Claims 1 to 9, **characterized in that** the rotor winding is constructed with conductors made of HTS material.

12. Machine according to Claim 11, **characterized in that** HTS strip conductors or HTS stranded composite conductors are provided.

13. Machine according to one of the preceding claims, **characterized in that** the thermal insulation means are a vacuum (V).

14. Machine according to one of the preceding claims, **characterized in that** the thermal insulation means are at least one superinsulation (11, 12).

15. Machine according to one of the preceding claims, **characterized by** a design as a synchronous motor, preferably as a generator.

## Revendications

1. Machine ( 2 ) de la technique de supraconduction, comprenant un stator ( 3 ) qui entoure, avec formation d'un entrefer ( 4 ), un rotor ( 5 ) monté tournant autour d'un axe ( A ) de rotor, dans lequel le rotor ( 5 )
- comporte une partie ( 8 ) froide,
a ) dans laquelle des supraconducteurs à refroidir d'un enroulement rotorique sont disposés
et,
b ) qui est entourée d'une carcasse ( 6 ) chaude sur la paroi ( 6a ) extérieure tournée vers l'entrefer ( 4 ) de laquelle il y a au moins une partie servant d'écran ( 10 ) d'amortissement,
ainsi que
- il y a un moyen isolant entre la partie ( 8 ) froide et la carcasse ( 6 ) chaude,
**caractérisé en ce qu'**il est prévu entre la carcasse ( 6) chaude et la partie ( 8 ) froide en des emplacements déterminés à l'avance des éléments ( 9a à 9d ) d'appui, qui s'étendent en direction radiale si loin que
- dans le cas où la machine ( 2 ) fonctionne sans panne, il est formé entre les éléments ( 9a à 9d ) d'appui et la carcasse ( 6 ) chaude ou la partie ( 8 ) froide respectivement une distance ( a ) petite,
et,
- seulement dans un cas de panne de la machine ( 2 ) entraînant une déformation de la carcasse ( 6 ) chaude dépassant une mesure déterminée à l'avance, il y a une application de force entre la carcasse ( 6 ) chaude et la partie ( 6 ) froide par l'intermédiaire des éléments ( 9a à 9d ) d'appui .

2. Machine suivant la revendication 1, **caractérisée en ce que** la distance ( a ) est formée respectivement entre les éléments ( 9a à 9d ) d'appui et la carcasse ( 6 ) chaude.

3. Machine suivant la revendication 1, **caractérisée en ce que** la distante ( a ) est formée respectivement entre les éléments ( 9a à 9d ) d'appui et la partie ( 8 ) froide.

4. Machine suivant l'une des revendications précédentes, **caractérisée en ce que** les éléments ( 9a à 9d ) d'appui sont disposés en des emplacements où dans le cas de panne une force de déformation agissant radialement vers l'intérieur s'applique à la carcasse ( 6 ) chaude.

5. Machine suivant l'une des revendications précédentes, **caractérisée en ce que** l'écran ( 10 ) d'amortissement est constitué sous la forme d'une partie de la carcasse ( 6 ) chaude.

6. Machine suivant l'une des revendications 1 à 4, **caractérisé en ce que** l'écran ( 10 ) d'amortissement est disposé sur la face extérieure ou sur la face intérieure de la carcasse ( 6 ) chaude.

7. Machine suivant l'une des revendications précédentes, **caractérisée en ce qu'**il est prévu plusieurs éléments ( 9a à 9d ) d'appui répartis dans la direction axiale.

8. Machine suivant l'une des revendications précédentes, **caractérisée en ce que** les éléments ( 9a à 9d ) d'appui sont en un matériau mauvais conducteur de la chaleur.

9. Machine suivant la revendication 8, **caractérisée en ce que** les éléments ( 9a à 9d ) d'appui sont en un matériau renforcé par de la fibre de verre.

10. Machine suivant l'une des revendications précédentes, **caractérisée en ce que** l'enroulement rotorique est produit par des conducteurs en matériau LTS.

11. Machine suivant l'une des revendications 1 à 9, **caractérisée en ce que** l'enroulement rotorique est produit par des conducteurs en matériau HTS.

12. Machine suivant la revendication 11, **caractérisée en ce qu'**il est prévu des conducteurs ruban HTS ou des conducteurs composites de câble HTS.

13. Machine suivant l'une des revendications précédentes, **caractérisée en ce que** les moyens isolants de la chaleur sont un vide ( V ).

14. Machine suivant l'une des revendications précédentes, **caractérisée en ce que** les moyens isolants de la chaleur sont au moins un superisolant ( 11, 12 ).

15. Machine suivant l'une des revendications précédentes, **caractérisée par** une constitution en moteur synchrone, de préférence en génératrice.
